Europäisches Patentamt

European Patent Office

Office européen des brevets

(19)

(11) **EP 0 865 461 B1**

(12) **EUROPEAN PATENT SPECIFICATION**

(45) Date of publication and mention
of the grant of the patent:
**16.01.2002 Bulletin 2002/03**

(51) Int Cl.⁷: **C08J 9/14**
// C08L75:04

(21) Application number: **96939043.4**

(22) Date of filing: **08.11.1996**

(86) International application number:
**PCT/EP96/05003**

(87) International publication number:
**WO 97/21764 (19.06.1997 Gazette 1997/26)**

(54) **PROCESS FOR THE PRODUCTION OF RIGID POLYURETHANE FOAMS IN THE PRESENCE OF HYDROCARBON BLOWING AGENTS**

VERFAHREN ZUR HERSTELLUNG VON POLYURETHANHARTSCHAUMSTOFFEN IN GEGENWART VON KOHLENWASSERSTOFFTREIBMITTELN

PROCEDE POUR PRODUIRE DES MOUSSES RIGIDES DE POLYURETHANE EN PRESENCE D'AGENTS GONFLANTS CONSTITUES PAR DES HYDROCARBURES

(84) Designated Contracting States:
**BE DE DK ES FR GB IT NL SE**

(30) Priority: **08.12.1995 US 608384**

(43) Date of publication of application:
**23.09.1998 Bulletin 1998/39**

(73) Proprietor: **HUNTSMAN INTERNATIONAL LLC Salt Lake City, Utah 84108 (US)**

(72) Inventor: **SINGH, Sachchida, Nand Sicklerville, NJ 08081 (US)**

(74) Representative: **Swinnen, Anne-Marie et al Intellectual Property Department Huntsman Polyurethanes Everslaan 45 3078 Everberg (BE)**

(56) References cited:
**US-A- 5 387 618          US-A- 5 451 615**

EP 0 865 461 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

Field of the Invention

The present invention is directed to processes for the production of rigid polyurethane foams. More specifically, the present invention is directed to processes for the production of rigid polyurethane foams utilizing a specific mixture of blowing agents.

Background of the Invention

Rigid polyurethane foams have many known uses, such as in building materials and as a thermal insulation medium for use in the construction industry as well as in refrigerated storage devices. The widespread commercial acceptance of rigid polyurethane foam as a thermal insulation medium is based upon its ability to provide outstanding initial and long term thermal insulation, its superior structural properties and its superior fire retardation properties, all at relatively low densities.

It is known to prepare such rigid polyurethane foams by reacting a polyisocyanate and an isocyanate-reactive compound (usually a polyol) in the presence of a blowing agent. A class of materials which has been widely used as a blowing agent in the production of such foam are the fully halogenated chlorofluorocarbon (CFC) blowing agents, such as trichlorofluoromethane (CFC-11). The advantages of the CFC's include their good thermal insulating properties, their relative non-flammability and the superior dimensional stability of the resulting foams. However, in spite of these advantages, CFC's have recently come into disfavor as they have been associated with the depletion of ozone in the earth's atmosphere and their use has thus been severely restricted.

Hydrochlorofluorocarbons (HCFC's), such as chlorodifluoromethane (HCFC-22), 1-chloro-1, 1-difluoroethane (HCFC-142b), 1,1,1-trifluoro-2,2-dichloroethane (HCFC-123) and particularly 1,1-dichloro-1-fluoroethane (HCFC-141b) have been considered a viable interim solution. However, HCFCs have also been shown to cause a depletion of ozone in the atmosphere and their use is under scrutiny. In fact, the widespread production and use of HCFC-141b is presently scheduled to end by the year 2002.

Accordingly, it can be seen that there is a need to develop processes for the production of rigid polyurethane foams and reaction systems for use therein which utilize blowing agents which have a zero ozone depletion potential and which still provide the excellent thermal insulation and dimensional stability required for commercial applications.

Various alkanes and cycloalkanes, such as such as n-pentane, n-butane and cyclopentane have been investigated as possible blowing agents for rigid polyurethane foams. The use of such materials is disclosed, e.g., in U.S. Patent Nos. 5,096,933 and 5,444,101. However, these materials have not been found to produce rigid polyurethane foams having commercially attractive physical properties at densities which are sufficiently low to make their use feasible. U.S. Patent No. 5,387,618 and 5,391,317 also are directed to polyurethane foams prepared in the presence of a physical blowing agent comprising 5-80 mole percent of a $C_{5-6}$ alicyclic alkane and 95 to 20 mole percent of a mixture of isopentane and n-pentane in a mole ratio of from 80:20 to 20:80. However, the formulations disclosed in these patents have been found to produce foams having insufficient dimensional stability and thermal insulation properties.

Accordingly, it can be seen that there remains a need for a process for the production of rigid polyurethane foams which utilizes a blowing agent having a zero ozone depletion potential which may be used to produce rigid polyurethane foam having excellent long term thermal insulation and stability characteristics.

It is thus an objective of the present invention to provide a process for the production of rigid polyurethane foams and a reaction system containing such a blowing agent. The present inventor has surprisingly found a process utilizing a blowing agent consisting essentially of isopentane produces rigid polyurethane foams having good thermal insulation and dimensional stability characteristics at densities which are lower than those seen in foams produced with other isomers of pentane. Although the initial K-factor of isopentane blown foam is generally higher than that of foams blown with HCFC-141b, cylcopentane and some blends of pentanes, the aged K factor (i.e., the long term insulation value) of the foams produced in accordance with the present invention is better than that for any of the pentanes above and at least equal to that of other pentane blends. Moreover, the long term insulation value of rigid foams prepared with the present process approaches a value close to that demonstrated by foams blown with HCFC-141b. Importantly, isopentane has a zero ozone depletion potential and thus satisfies all current environmental concerns.

Summary of the Invention

The present invention is thus directed to a process for the production of rigid polyurethane foam comprising the reaction of (1) an organic polyisocyanate; (2) an isocyanate-reactive composition containing a plurality of isocyanate-reactive groups which are useful in the formation of rigid polyurethane or urethane-modified polyisocyanurate foams comprising a polyester polyol (3) a blowing agent comprising isopentane and n-pentane in ratios of from 99:1 to 90:10 parts by weight under foam forming conditions. Optionally, the process may further comprise the reaction of components (1) to (3) with (4) water or other carbon dioxide generating agents. Components (1), (2), (3), and optionally, (4) comprise a reaction system which is also within the scope of the present invention.

The present invention is further directed to reaction systems which may be utilized in such a process. This reaction system comprises (1) an organic polyisocyanate; (2) an isocyanate-reactive composition containing a plurality of isocyanate-reactive groups comprising a polyester polyol and (3) a blowing agent comprising isopentane and n-pentane in ratios of from 99:1 to 90:10 parts by weight. The present invention is further directed to rigid polyurethane foams prepared by the present process.

Detailed Description of the Invention

The blowing agent utilized in the present invention comprises isopentane and n-pentane in a ratio of 99:1 to 90:10 parts by weight. Preferably, the blowing agent useful in the present invention comprises isopentane to n-pentane in a ratio of from 98.5:1.5 to 90:10, more preferably 97.5:2.5 to 90:10, and most preferably 97:3 to 90:10 parts by weight.

The total quantity of blowing agent to be used in the present process for producing rigid polyurethane foams as needed for a particular purpose will be readily determinable by those skilled in the art. However, typical amounts of blowing agent will be from about 2 to about 15% and preferably about 3 to about 10 % by weight based on the total weight of the reaction system.

Organic polyisocyanates suitable for use in the present invention include any of the polyisocyanates known in the art for the production of rigid polyurethane or urethane-modified polyisocyanurate foams. In particular, useful organic polyisocyanates include those having a functionality greater than 2.0 such as diphenylmethane diisocyanate (MDI) in the form of its 2,4'-and 4,4'-isomers and mixtures thereof, mixtures of diphenylmethane diisocyanate and oligomers thereof (known as "crude" MDI) and polymeric MDI (i.e., polymethylene polyphenylene polyisocyanates). Polyisocyanates modified with carbodiimide groups, methane groups, allophanate groups, isocyanate groups, urea groups, biuret groups and oxazolidone groups may also be used in the process of the present invention.

Isocyanate-reactive compositions containing a plurality of isocyanate-reactive groups suitable for use in the present invention include polyether polyols, polyester polyols and mixtures thereof, having average hydroxyl numbers of from 100 to 1000 and preferably 150 to 700 KOH/g and hydroxyl functionalities of 2 to 8 and preferably 2 to 6. The isocyanate-reactive composition for use in the present invention comprises at least a polyester polyol.

Suitable polyether polyols include reaction products of alkylene oxides, for example ethylene oxide and/or propylene oxide, with initiators containing from 2 to 8 active hydrogen atoms per molecule. Suitable initiators include polyols, e.g., glycerol, trimethylolpropane, triethanolamine, pentaerythritol, sorbitol and sucrose; polyamines, e.g., ethylene diamine, tolylene diamine, diaminodiphenylmethane and polymethylene polyphenylene polyamines; amino alcohols, e.g., ethanolamine and diethanolamine; and mixtures thereof. Preferred initiators are diaminodiphenylmethane and polymethylene polyphenylene polyamines.

Suitable polyester polyols include those prepared by reacting a polycarboxylic acid and/or a derivative thereof or a polycarboxylic anhydride with a polyhydric alcohol. The polycarboxylic acids may be aliphatic, cycloaliphatic, aromatic and/or heterocyclic and may be substituted (e.g., with halogen atoms) and/or unsaturated. Examples of suitable carboxylic acids and anhydrides include succinic acid, adipic acid, suberic acid, azelaic acid, sebacic acid, phthalic acid, isophthalic acid, terephthalic acid, trimellitic acid, phthalic acid, anhydride, tetrahydrophthalic acid anhydride, hexahydrophthalic acid anhydride, endomethylene tetrahydrophthalic acid anhydride, glutaric acid anhydride, maleic acid, maleic acid anhydride, fumaric acid, dimeric and trimeric fatty acids, such as those of oleic acid which may be in admixture with monomeric fatty acids. Simple esters of polycarboxylic acids may also be used, such as terephthalic acid, dimethyl ester, terephthalic acid bisglycol ester and mixtures thereof.

Examples of suitable polyhydric alcohols include ethylene glycol, 1,2-propylene glycol, 1,3-propylene glycol, 1,3-, 1,4-, 1,2-, 2,3-butylene glycol, 1,6-hexane diol, 1,8-octane diol, neopentyl glycol, cyclohexane dimethanol 1,4-bis-hydroxyl methyl cyclohexane, 2-methyl-1,3-propane diol, glycerol, trimethylol propane, 1,2,6-hexane triol, 1,2,4-butane triol, trimethylolethylene, pentaarythritol, quitinol, mannitol, sorbitol, methylglycoside, diethylene glycol, triethylene glycol, tetraethylene glycol, polyethylene glycol, dipropylene glycol, polypropylene glycol, dibutylene glycol, polybutylene glycols. The polyesters may contain some terminal carboxy groups, although preferably they are hydroxyl-terminated. It is also possible to use polyesters of lactones such as caprolactone or hydroxy carboxylic acids such as hydroxy caproic acid or hydroxycetic acid.

Further suitable polymeric polyols include hydroxyl-terminated polythioethers, polyamides, polyester amides, polycarbonates, polyacetals, polyolefins and polysiloxanes.

The organic polyisocyanate component will generally be used in an amount of about 35 to about 65, preferably about 50 to about 60 and most preferably about 53 to about 57 weight percent of the total system. The isocyanate-reactive composition will generally be used in an amount of about 19 to about 63, preferably about 25 to about 50 and most preferably about 29 to about 33 weight percent of the total system. The quantities of the polyisocyanate compositions and the isocyanate-reactive compositions will depend upon the nature of the material to be produced and will be readily determined by those skilled in the art.

The isocyanate-reactive component of the present reaction systems may further comprise chain extenders and/or crosslinking agents. In general, useful chain extenders are those having a formula weight below about 750 and preferably about 62 to 750 and a functionality of about 2. Suitable chain extenders may be selected from polyols, e. g., ethylene glycol, diethylene glycol, butanediol, dipropylene glycol and tripropylene glycol; aliphatic and aromatic amines, e.g., 4,4'-methylene dianilines having a lower alkyl substituent positioned ortho to each N atom; certain imino-functional compounds such as those disclosed in European Patent Application Publication Nos. 284253 and 359456; and certain enamino functional compounds such as those disclosed in European Patent Application Publication Nos. 359456 having two isocyanate-reactive groups per molecule.

Suitable crosslinking agents include glycerol, oxyalkylated glycerol, pentaerythritol, sucrose, trimethylolpropane, sorbitol and oxyalkylated polyamines. The functionality of the crosslinking agents may range from about 3 to about 8 and preferably about 3 to about 4. The molecular weight of the crosslinking agents may vary between the same ranges as disclosed above with respect to the chain extender. A preferred class of crosslinking agents includes oxypropylated derivatives of glycerol having a number average molecular weight of about 200 to about 750, glycerol and mixtures thereof.

The reaction systems of the present invention may further comprise water or other carbon dioxide generating agents, such as mono- or polycarboxylic acid and hydroxy-functional cyclic ureas. When used, such carbon dioxide generating agents should be used in amounts of about 0.05 to about 2.0 and preferably about 0.35 to about 1.0 weight percent based on the total weight of the reaction system.

In order to reduce the cell size of the rigid polyurethane foam prepared in accordance with the present invention and thus improve the thermal insulation properties of the foam, an inert, insoluble fluorinated compound may be added to the isocyanate-reactive material used in the present process. Such inert, insoluble fluorinated compounds include any of those disclosed in U.S. Patent Nos. 5,346,928, 4,981,871; 5,034,424; 4,972,002 and European Patent Application No. 0508649. It is preferred, however, to use an inert, insoluble, substantially fluorinated compound having a boiling point of at least 20°C at atmospheric pressure and preferably at least 40°C and more preferably 60-100°C. Suitable compounds include substantially fluorinated or perfluorinated hydrocarbons, ethers, tertiary amines, amino ethers and sulphones. The term "substantially fluorinated or perfluorinated" is intended to refer to compounds in which at least 50% of the hydrogen atoms are replaced by fluorine. Examples of preferred substantially fluorinated or perfluorinated compounds include perfluoro-n-pentane, perfluoro-n-hexane, and perfluorinated alkyltetrahydrofurans. The inert insoluble fluorinated compound should be used in an amount ranging from about 0.01 to about 5% by weight of the total system.

The reaction system used in the present process may further comprise one or more auxiliary agents or additives as needed for particular purposes. Suitable auxiliary agents and additives include foam stabilizing agents or surfactants (e.g., organo-silicone polymers), catalysts (e.g., stannous octoate, dibutyl tin laurate, tertiary amine), fire retardants (e.g., tris(2-chloroethyl)-phosphate and organo-phosphorous compounds), viscosity reducers, compatibility agents, mold release agents, fillers, pigments and anti-oxidants. Suitable additives and amounts thereof as needed for a particular purpose will be easily recognizable by one skilled in the art from the present disclosure.

The present invention will now be illustrated with reference to the following, non-limiting examples.

## Example 1

Twelve samples containing the components described in Tables 1, 2 and 3 were prepared utilizing CFC-11, isopentane, n-pentane, cyclopentane and HCFC-141b as blowing agents as indicated. The "A side" of the system contained the polyisocyanate while the "B side" of the systems contained all other ingredients. The B side components were prepared by mixing all of the components together at room temperature in a high speed mixer.

Table 1

| Components | CFC-11 Blown (*) | |
|---|---|---|
| Stepanpol® PS-2502-A | 100 | 100 |
| Dabco® DC 193 | 2.5 | 2.5 |
| K-octoate in DEG solution | 3 | 3 |
| Dabco® TMR-30 | 1 | 1 |

(*) comparative example.

Table 1 (continued)

| Components | CFC-11 Blown (*) | |
|---|---|---|
| CFC-11 | 45 | 43 |
| Total Blowing, mis/gm | 24.45 | 23.36 |
| Index | 250 | 250 |
| Rubinate® 1850 | 148.25 | 148.25 |
| *Reactivities:* | | |
| Cream time (sec) | 11 | 11 |
| Gel time (sec) | 27 | 26 |
| End of Rise (sec) | 66 | 65 |
| *Foam Properties:* | | |
| Foam Core Density (pcf) | 1.75 (= 28 kg/m$^3$) | 1.83 (= 29,2 kg/m$^3$) |
| Dim. Stab @ -20°F, % Linear Change (= -28°C) | -3.3 | -1 |

(*) comparative example.

Table 2

| Components | 1 | 2 (*) | 3 (*) | 4 (*) | 5 (*) |
|---|---|---|---|---|---|
| Stepan® PS 2352 | 31.2 | 31.2 | 31.2 | 31.2 | 32.87 |
| TCPP | | 3 3 | 3 | 3 | |
| TEP | | 3 3 | 3 | 3 | |
| K-octoate in DEG | 0.75 | 0.75 | 0.75 | 0.75 | 0.66 |
| K-acetate in DEG | 0.25 | 0.25 | 0.25 | 0.25 | 0.16 |
| Polycat® 5 | 0.12 | 0.12 | 0.12 | 0.12 | 0.15 |
| Tegostab® B84PI | | | | | 0.82 |
| Tegostab® B8466 | 1 | 1 | 1 | 1 | |
| Isopentane | 5.66 | | | 1.89 | |
| n-Pentane | | 5.66 | | 1.89 | |
| Cyclopentane | | | 5.66 | 1.89 | |
| Ratio of iso/n-/cyclo | 97.5:2.5:0 | 0.1:99.9:0 | 0.7:10.3:89 | 33:38:29 | - |
| HCFC-141b | | | | | 11.66 |
| Water | 0.35 | 0.35 | 0.35 | 0.35 | 0.16 |
| Total blowing (ml/g) | 22 | 22 | 22 | 22 | 24.36 |
| Index | 275 | 275 | 275 | 275 | 250 |

(*) Comparative example

Table 2   (continued)

| Components | 1 | 2 (*) | 3 (*) | 4 (*) | 5 (*) |
|---|---|---|---|---|---|
| Rubinate® 1850 | 54.69 | 54.69 | 54.69 | 54.69 | 53.51 |
| *Reactivities:* | | | | | |
| Cream/gel time (sec) | 7/27 | 9/29 | 12/27 | 10/29 | 12/25 |
| TFT/EOR time (sec) | 44/73 | 43/63 | 42/64 | 44/88 | 36/64 |
| *Foam Properties:* | | | | | |
| Foam Core Density (pcf) | 1.82 = 29 kg/m$^3$ | 1.89 (= 30 kg/m$^3$) | 1.93 (= 31 kg/m$^3$) | 1.92 (= 31 kg/m$^3$) | 1.89 = (30kg/m$^3$) |
| Dim.Stab. (@20°F,% lin change) (=-7°C) | -0.8 | -0.1 | -1.5 | -0.8 | -0.7 |
| *Thermal Cond. (in BTU in/ft$^2$.hr°F):* (figure between brackets is in mW/mK) | | | | | |
| Initial | 0.158 (= 22,7) | 0.159 (= 22,4) | 0.154 (= 22,2) | 0.155 (= 22,3) | 0.143 (= 20,6) |
| 4 weeks at 140°F (= 60°C) | 0.184 (= 26,5) | 0.186 (= 26,8) | 0.189 (= 27,2) | 0.182 (= 26,2) | 0.169 (= 29,4) |
| 8 weeks at 140°F (= 60°C) | 0.187 (= 26,9) | 0.19 (= 27,4) | 0.194 (= 27,9) | 0.188 (= 27,1) | 0.179 (= 25,8) |
| 12 weeks at 140°F (= 60°C) | 0.187 (= 26,9) | 0.191 (= 27,5) | 0.193 (= 27,2) | 0.187 (= 26,9) | 0.185 (= 26,7) |

(*) Comparative example

Table 3

| Components | 6 | 7(*) | 8 (*) | 9 (*) | 10 (*) |
|---|---|---|---|---|---|
| Terate® 2541 | 31.2 | 31.2 | 31.2 | 31.2 | 32.87 |
| TCPP | 3 | 3 | 3 | 3 | |
| TEP | 3 | 3 | 3 | 3 | |
| K-octoate in DEG | 0.75 | 0.75 | 0.75 | 0.75 | 0.66 |
| K-acetate in DEG | 0.25 | 0.25 | 0.25 | 0.25 | 0.16 |
| Polycat® 5 | 0.12 | 0.12 | 0.12 | 0.12 | 0.15 |
| Tegostab® B84PI | | | | | 0.82 |

(*) Comparative example

Table 3   (continued)

| Components | 6 | 7(*) | 8 (*) | 9 (*) | 10 (*) |
|---|---|---|---|---|---|
| Tegostab® B8466 | 1 | 1 | 1 | 1 | |
| Isopentane | 5.66 | | | 1.89 | |
| n-Pentane | | 5.66 | | 1.89 | |
| Cyclopentane | | | 5.66 | 1.89 | |
| Ratio of iso/n-/cyclo | 97.5:2.5:0 | 0.1:99.9:0 | 0.7:10.3:89 | 33:38:29 | - |
| HCFC-141b | | | | | 11.66 |
| Water | 0.35 | 0.35 | 0.35 | 0.35 | 0.16 |
| Total blowing (ml/g) | 22 | 22 | 22 | 22 | 24.36 |
| Index | 275 | 275 | 275 | 275 | 250 |
| Rubinate® 1850 | 54.69 | 54.69 | 54.69 | 54.69 | 53.51 |
| *Reactivities*: | | | | | |
| Cream/gel time (sec) | 8/30 | 9/29 | 12/27 | 11/31 | 14/27 |
| TFT/EOR time (sec) | 44/73 | 41/63 | 39/62 | 51/72 | 44/68 |
| *Foam Properties:* | | | | | |
| Foam Core Density (pcf) | 1.81 = 29 kg/m$^3$ | 1.88 = 30 kg/m$^3$ | 1.92 (= 31 kg/m$^3$) | 1.91 (= 31 kg/m$^3$) | 1.88 = 30 kg/m$^3$ |
| Dim.Stab. (@20°F (= -7°C),% lin change) (-7°C) | -0.5 | -0.7 | -2 | -0.8 | -4 |
| *Thermal Cond. (in BTU in/ft$^2$.hr°F):* (between brackets in mW/mK) | | | | | |
| Initial | 0.165 (= 23,8) | 0.163 (25,5) | 0.160 (23,1) | 0.159 (22,9) | 0.147 (21,2) |
| 4 weeks at 140°F (= 60°C) | 0.193 (27,8) | 0.196 (28,2) | 0.199 (28,7) | 0.191 (27,5) | 0.180 (25,9) |
| 8 weeks at 140°F (= 60°C) | 0.194 (27,9) | 0.201 (28,9) | 0.203 (29,3) | 0.193 (27,8) | 0.190 (27,9) |
| 12 weeks at 140°F (= 60°C) | 0.195 (28,1) | 0.201 (28,9) | 0.201 (28,9) | 0.195 (28,1) | 0.193 (27,8) |

(*) Comparative example

RUBINATE® 1850 is a high functionality polymeric diphenylmethane diisocyanate available from ICI Americas Inc.

STEPANPOL® PS-2502-A is an aromatic polyester polyol available from the Stepan Company.

DABCO® DC 193 is a silicone surfactant available from Air Products Inc.

DABCO® TMR-30 is a tertiary amine catalyst from Air Products Inc.

STEPAN® PS 2352 is an aromatic polyester polyol available from the Stepan Company.

TERATE® 2541 is an aromatic polyester polyol available from Cape Industries.

TCPP is tri(beta-chloropropyl)phosphate available from Great Lakes Chemical Corp (containing 32.5% Cl and 9.5% P).

TEP is triethylphosphate available from Focus Chemical Corporation containing 18.7%P).

The potassium acetate used was a 15% solution in DEG available from Air Products.

The potassium octoate used was a 15% solution in DEG available from Pelron Corp.

POLYCAT® 5 is a polyurethane promoting catalyst available from Air Products Inc.

TEGOSTAB® B8466 is a silicone surfactant available from Goldschmidt Corporation.

The cyclopentane utilized in samples 1-16 is a technical grade cyclopentane containing 77.5 % cyclopentane, 9% n-pentane and 0.6% isopentane (the remainder being impurities), available from Phillips.

The isopentane utilized in samples 1-10 contains 97.5% isopentane and 2.5% n-pentane and is available from Southhampton Refining Company. The isopentane utilized in Samples 11-16 contains 99% isopentane and 0.4% n-pentane and is also availablefrom Southampton Refining Company.

The n-pentane utilized in samples 1-16 contains 99.6 % n-pentane and 0.1% isopentane (the remainder being impurities) and is available from Southhampton Refining Company.

The CFC-11 utilized was available from ICI Americas Inc.

The reactivity of each sample was measured by preparing a free rise cup foam by mixing the ingredients set forth in Tables 1, 2 and 3 utilizing a high speed propeller mixer at room temperature. The physical properties of the core foam were measured on a free rise foam made by mixing the ingredients and pouring them in a 7" x 7" x 15" (= 17,8 x 17,8 x 38 cm) paper box immediately after mixing. The foam core density was measured according to procedure set forth in ASTM D 1622 and the dimensional stability of the foams at -20°F (= -29°C) was measured using the long term dimensional stability method as described in "Factors Affecting the Long Term Dimensional Stability of Rigid Foam for the Construction Industry", Daems, Rosobothom, Franco and Singh, 35th Annual SPI Technical/Marketing Conference, October 1994. The thermal conductivity of the samples was measured according to the procedures set forth in ASTM C518 on a core foam taken from 15" x 15" x 14" (= 38 x 38 x 35,5 cm) foam blocks. The total blowing of the foam formulations was calculated utilizing the following equation:

$$\text{ml of Gas/gm} = \text{Sum of } \frac{\text{Weight of blowing component x 22400}}{\text{Total wt of Foam x Molecular wt of blowing component}}$$

Foams shown in Table 1 establish the reference point for the foam technology prior to the concern about ozone depletion by the blowing agent CFC-11 started.

As can be seen in Tables 2 and 3, the foam samples blown with isopentane in accordance with the present invention (Samples 1 and 6) provide dimensionally stable foams at a relatively low density. A dimensionally stable foam, defined as a foam with % linear change of less than or equal to 1% in the dimensional stability test, can be made with the blowing agent described in this invention (Samples 1 and 6 in Tables 2 and 3) at a density similar to those blown with the blowing agent CFC-11 (Table 1). The use of CFC-11 has been severely restricted due to its association with depletion of ozone in earth's atmosphere. A dimensionally stable foam can also be made at a density lower than those blown with the blowing agent HCFC-141b (Sample 5 and 10 in Tables 2 and 3), whose use is presently scheduled to end by the year 2002.

Also, the blowing efficiency, as measured by the density of the foam obtained for a given amount of blowing agent per unit weight of the formulation, is lowest for the foams prepared in accordance with the present invention. The excellent dimensional stability provided by the present blowing agent, combined with its exceptional blowing efficiency, leads to the conclusion that structurally stable rigid polyurethane foams can be made utilizing lower amounts of blowing agent. Furthermore, the aged K factor of the foams prepared in accordance with the present invention is better than for any of the pentanes above and equivalent to the foams blown with the pentane blend (Samples 4 and 9).

## Example 2

Table 4 shows the formulation, reactivity and physical properties of rigid foam Samples 10-16 prepared with various blends of isopentane and n-pentane. The foams were prepared in the manner discussed above in Example 1. Thermal conductivity was measured following the procedure set forth in ASTM C518. Foam core density and dimensional stability at -20°F (= -29°C) were measured following the method referred in Example 1.

It can be seen that foams prepared using blowing agents containing blends of isopentane to n-pentane in ratios 90:10 to 97:3 (Sample 14 to Sample 15) are dimensionally stable at a density similar to that typical for CFC-11.

Such stability was not possible with HCFC-141b, the interim blowing agent for the building insulation industry or any of the other mixtures evaluated.

This excellent dimensional stability means that structurally stable rigid polyurethane foams can be made and used at lower density if the present process and reaction systems are used. The initial K-factor of the foams prepared with blends of isopentane and n-pentane in the ratio 90:10 to 97:3 (Samples 14 and 15) is a little lower than those blown with pure isopentane or pure n-pentane. The aged K-factor, i.e., the long term insulation value of the foams, for blends of 90:10 (Sample 14) and 97:3 (Sample 15) isopentane to n-pentane is better than that for any of the other pentanes tested. The long term insulation value of the 90:10 and 97:3 isopentane to n-pentane blends approaches a value very close to that for HCFC-141b.

Table 4

| Components | 11 (*) | 12 (*) | 13 (*) | 14 | 15 | 16 (*) |
|---|---|---|---|---|---|---|
| Stepan® PS 2352 | 31.2 | 31.2 | 31.2 | 31.2 | 31.2 | 31.2 |
| TCPP | 3 | 3 | 3 | 3 | 3 | 3 |
| TEP | 3 | 3 | 3 | 3 | 3 | 3 |
| K-octoate in DEG | 0.75 | 0.75 | 0.75 | 0.75 | 0.75 | 0.75 |
| K-acetate in DEG | 0.25 | 0.25 | 0.25 | 0.25 | 0.25 | 0.25 |
| Polycat® 5 | 0.12 | 0.12 | 0.12 | 0.12 | 0.12 | 0.12 |
| Tegostab® B8466 | 1 | 1 | 1 | 1 | 1 | 1 |
| Isopentane | 0 | 2.83 | 4.53 | 5.09 | 5.49 | 5.66 |
| n-Pentane | 5.82 | 2.83 | 1.13 | 0.57 | 0.17 | 0 |
| Ratio of iso-/n-pentane | 0:100 | 50:50 | 80:20 | 90:10 | 97:3 | 100:0 |
| Water | 0.35 | 0.35 | 0.35 | 0.35 | 0.35 | 0.35 |
| Total blowing (mls/gm) | 22 | 22 | 22 | 22 | 22 | 22 |
| Index | 275 | 275 | 275 | 275 | 275 | 275 |
| Rubinate® 1850 | 54.69 | 54.69 | 54.69 | 54.69 | 54.69 | 54.69 |
| *Reactivities*: | | | | | | |
| Cream/gel time (sec) | 8/28 | 8/28 | 8/30 | 8/28 | 7/27 | 8/29 |
| TFT/EOR time (sec) | 41/65 | 41/64 | 44/65 | 38/65 | 44/63 | 38/63 |
| *Foam Properties:* | | | | | | |
| Foam Core Density (pcf) | 1.82 (= 29 kg/m$^3$) | 1.83 (= 29 kg/m$^3$) | 1.83 (= 29 kg/m$^3$) | 1.83 (= 29 kg/m$^3$) | 1.82 (= 29 kg/m$^3$) | 1.81 (= 29 kg/m$^3$) |
| Dim.Stab.(@-20°F, (=-29°C) % linear change) | -1.7 | -2.2 | -0.2 | -0.1 | -0.1 | -0.8 |

(*) Comparative example

Table 4   (continued)

| Components | 11 (*) | 12 (*) | 13 (*) | 14 | 15 | 16 (*) |
|---|---|---|---|---|---|---|
| *Thermal Cond. (in BTU in/ft². hr°F):* (between brackets in mW/mK) | | | | | | |
| Initial | 0.169 (24,9) | 0.163 (23,5) | 0.157 (22,6) | 0.157 (22,6) | 0.157 (22,6) | 0.162 (23,3) |
| 4 weeks at 140°F (= 60°C) | 0.198 (28,5) | 0.192 (27,7) | 0.185 (26,7) | 0.184 (26,5) | 0.184 (26,5) | 0.192 (27,7) |
| 8 weeks at 140°F (= 60°C) | 0.203 (29,3) | 0.196 (28,2) | 0.192 (27,7) | 0.189 (27,2) | 0.187 (26,9) | 0.195 (28,1) |
| 12 weeks at 140°F (= 60°C) | 0.205 (29,5) | 0.199 (28,7) | 0.193 (27,8) | 0.191 (27,5) | 0.187 (26,9) | 0.197 (28,4) |

(*) Comparative example

Accordingly, it can be seen from the data set forth in Table 4 that the present process and the reaction systems used therein produce rigid polyurethane foams having excellent dimensional stabilities as well as superior long term insulation values (as demonstrated by the aged K-factor) in comparison to foams prepared with conventional processes.

## Claims

1. A process for the production of rigid polyurethane foams comprising the reaction of (1) an organic polyisocyanate; (2) an isocyanate-reactive composition containing a plurality of isocyanate-reactive groups comprising a polyester polyol having an average hydroxyl number of from 100 to 1000 mg KOH/g and hydroxyl functionality of 2 to 8; and (3) a blowing agent comprising isopentane and n-pentane in a ratio of from 99:1 to 90:10 parts by weight under foam forming conditions.

2. A process as in claim 1, wherein the polyester polyol is an aromatic polyester polyol.

3. A process as in claim 1, further comprising a carbon dioxide-generating material selected from the group consisting of water, monocarboxylic acid, polycarboxylic acids and hydroxy-functional cyclic ureas.

4. A process as in claim 3, wherein said carbon dioxide-generating agent is water.

5. A process as in claim 1, wherein said blowing agent comprises isopentane to n-pentane in a ratio of 98.5:1.5 to 90:10 parts by weight.

6. A process as in claim 5, wherein said blowing agent comprises isopentane to n-pentane in the ratio of 97.5:2.5 to 90:10 parts by weight.

7. A process as in claim 6, wherein said blowing agent comprises isopentane to n-pentane in a ratio of 97:3 to 90:10 parts by weight.

8. A process as in claim 1, wherein said organic polyisocyanate is selected from the group consisting of 4,4'-diphenylmethane diisocyanate, 2,4'-diphenylmethane diisocyanate, polymeric diphenylmethane diisocyanate and diphenylmethane diisocyanate modified with carbodiimide groups, methane groups, allophanate groups, isocyanate groups, urea groups, biuret groups or oxazolidone groups.

9. A reaction system for the production of rigid polyurethane foams comprising (1) an organic polyisocyanate; (2) an isocyanate-reactive composition containing a plurality of isocyanate-reactive groups groups comprising a polyester polyol having an average hydroxyl number of from 100 to 1000 mg KOH/g and hydroxyl functionality of 2 to 8; and (3) a blowing agent comprising isopentane and n-pentane in a ratio of 99:1 to 90:10 parts by weight.

10. A reaction system as in claim 9, wherein the polyester polyol is an aromatic polyester polyol.

11. A reaction system as in claim 9, further comprising a carbon dioxide-generating material selected from the group consisting of water, monocarboxylic acids, polycarboxylic acids and hydroxy-functional cyclic ureas.

12. A reaction system as in claim 11, wherein said carbon dioxide-generating material is water.

13. A reaction system as in claim 9, wherein said blowing agent comprises isopentane to n-pentane in a ratio of 98.5: 1.5 to 90:10 parts by weight.

14. A reaction system as in claim 13, wherein said blowing agent comprises isopentane to n-pentane in a ratio of 97.5: 2.5 to 90:10 parts by weight.

15. A reaction system as in claim 14, wherein said blowing agent comprises isopentane to n-pentane in a ratio of 97: 3 to 90:10 parts by weight.

16. A reaction system as in claim 9, wherein said organic polyisocyanate is selected from the group consisting of 4,4'-diphenylmethane diisocyanate, 2,4'-diphenylmethane diisocyanate, polymeric diphenylmethane diisocyanate and diphenylmethane diisocyanate diisocyanate modified with carbodiimide groups, methane groups, allophanate groups, isocyanate groups, urea groups, biuret groups and oxazolidone groups.

17. A rigid polyurethane foam produced by the process of claim 1.


**Patentansprüche**

1. Verfahren zur Herstellung von Polyurethanhartschaumstoffen, welches die Reaktion (1) eines organischen Polyisocyanats; (2) einer isocyanatreaktiven Zusammensetzung, die eine Mehrzahl von isocyanatreaktiven Gruppen enthält und die ein Polyesterpolyol mit einer durchschnittlichen Hydroxylzahl von 100 bis 1000 mg KOH/g und einer Hydroxylfunktionalität von 2 bis 8 umfasst; und (3) eines Treibmittels, das Isopentan und n-Pentan in einem Verhältnis von 99:1 bis 90:10 Masseteilen unter Schaumstoffbildungsbedingungen umfasst.

2. Verfahren gemäß Anspruch 1, wobei das Polyesterpolyol ein aromatisches Polyesterpolyol ist.

3. Verfahren gemäß Anspruch 1, das des Weiteren ein Kohlenstoffdioxid erzeugendes Material umfasst, das aus der aus Wasser, Monocarbonsäure, Polycarbonsäuren und hydroxylfunktionalisiserten cyclischen Harnstoffen bestehenden Gruppe ausgewählt ist.

4. Verfahren gemäß Anspruch 3, wobei das Kohlenstoffdioxid erzeugende Mittel Wasser ist.

5. Verfahren gemäß Anspruch 1, wobei das Treibmittel Isopentan zu n-Pentan in einem Verhältnis von 98,5:1,5 bis 90:10 Masseteilen umfasst.

6. Verfahren gemäß Anspruch 5, wobei das Treibmittel Isopentan zu n-Pentan im Verhältnis von 97,5:2,5 bis 90:10 Masseteilen umfasst.

7. Verfahren gemäß Anspruch 6, wobei das Treibmittel Isopentan zu n-Pentan in einem Verhältnis von 97:3 bis 90:10 Masseteilen umfasst.

8. Verfahren gemäß Anspruch 1, wobei das organische Polyisocyanat aus der aus 4,4'-Diphenylmethandiisocyanat, 2,4'-Diphenylmethandiisocyanat, polymerem Diphenylmethandiisocyanat und mit Carbodiimidgruppen, Methangruppen, Allophanatgruppen, Isocyanatgruppen, Harnstoffgruppen, Biuretgruppen oder Oxazolidongruppen modifiziertem Diphenylmethandiisocyanat bestehenden Gruppe ausgewählt ist.

9. Reaktionssystem für die Herstellung von Polyurethanhartschaumstoffen, welches (1) ein organisches Polyisocyanat; (2) eine isocyanatreaktive Zusammensetzung, die eine Mehrzahl von isocyanatreaktiven Gruppen enthält und die ein Polyesterpolyol mit einer durchschnittlichen Hydroxylzahl von 100 bis 1000 mg KOH/g und einer Hydroxylfunktionalität von 2 bis 8 umfasst; und (3) ein Treibmittel, das Isopentan und n-Pentan in einem Verhältnis von 99:1 bis 90:10 Masseteilen umfasst.

10. Reaktionssystem gemäß Anspruch 9, wobei das Polyesterpolyol ein aromatisches Polyesterpolyol ist.

11. Reaktionssystem gemäß Anspruch 9, das des Weiteren ein Kohlenstoffdioxid erzeugendes Material umfasst, das aus der aus Wasser, Monocarbonsäuren, Polycarbonsäuren und hydroxylfunktionalisiserten cyclischen Harnstoffen bestehenden Gruppe ausgewählt ist.

12. Reaktionssystem gemäß Anspruch 11, wobei das Kohlenstoffdioxid erzeugende Material Wasser ist.

13. Reaktionssystem gemäß Anspruch 9, wobei das Treibmittel Isopentan zu n-Pentan in einem Verhältnis von 98,5: 1,5 bis 90:10 Masseteilen umfasst.

14. Reaktionssystem gemäß Anspruch 13, wobei das Treibmittel Isopentan zu n-Pentan in einem Verhältnis von 97,5: 2,5 bis 90:10 Masseteilen umfasst.

15. Reaktionssystem gemäß Anspruch 14, wobei das Treibmittel Isopentan zu n-Pentan in einem Verhältnis von 97: 3 bis 90:10 Masseteilen umfasst.

16. Reaktionssystem gemäß Anspruch 9, wobei das organische Polyisocyanat aus der aus 4,4'-Diphenylmethandiisocyanat, 2,4'-Diphenylmethandiisocyanat, polymerem Diphenylmethandiisocyanat und mit Carbodiimidgruppen, Methangruppen, Allophanatgruppen, Isocyanatgruppen, Harnstoffgruppen, Biuretgruppen und Oxazolidongruppen modifiziertem Diphenylmethandiisocyanat bestehenden Gruppe ausgewählt ist.

17. Polyurethanhartschaumstoff, der durch das Verfahren gemäß Anspruch 1 hergestellt worden ist.

## Revendications

1. Procédé pour la production de mousses rigides de polyuréthanne, comprenant la réaction (1) d'un polyisocyanate organique ; (2) d'une composition réactive avec les isocyanates, comprenant une pluralité de groupes réactifs avec les isocyanates, comprenant un polyester-polyol ayant un indice d'hydroxyle moyen de 100 à 1000 mg de KOH/g et une fonctionnalité hydroxyle de 2 à 8 ; et (3) d'un agent porogène comprenant de l'isopentane et du n-pentane en un rapport compris dans l'intervalle de 99:1 à 90:10 parties en poids, dans des conditions de formation de mousse.

2. Procédé suivant la revendication 1, dans lequel le polyester-polyol est un polyester-polyol aromatique.

3. Procédé suivant la revendication 1, comprenant en outre une matière engendrant du dioxyde de carbone choisie dans le groupe consistant en l'eau, un acide monocarboxylique, des acides polycarboxyliques et des urées cycliques à fonctionnalité hydroxy.

4. Procédé suivant la revendication 3, dans lequel l'agent engendrant du dioxyde de carbone est l'eau.

5. Procédé suivant la revendication 1, dans lequel l'agent porogène comprend de l'isopentane et du n-pentane en un rapport de l'isopentane au n-pentane compris dans l'intervalle de 98,5:1,5 à 90:10 parties en poids.

6. Procédé suivant la revendication 5, dans lequel l'agent porogène comprend de l'isopentane et du n-pentane en un rapport de l'isopentane au n-pentane compris dans l'intervalle de 97,5:2,5 à 90:10 parties en poids.

7. Procédé suivant la revendication 6, dans lequel l'agent porogène comprend de l'isopentane et du n-pentane en un rapport de l'isopentane au n-pentane compris dans l'intervalle de 97:3 à 90:10 parties en poids.

8. Procédé suivant la revendication 1, dans lequel le polyisocyanate organique est choisi dans le groupe consistant en le 4,4'-diphénylméthane-diisocyanate, le 2,4'-diphénylméthane-diisocyanate, un diphénylméthane-diisocyanate polymère et un diphénylméthane-diisocyanate modifié avec des groupes carbodiimide, des groupes méthane, des groupes allophanate, des groupes isocyanate, des groupes urée, des groupes biuret ou des groupes oxazolidone.

9. Système réactionnel pour la production de mousses rigides de polyuréthanne, comprenant (1) un polyisocyanate organique ; (2) une composition réactive avec les isocyanates, contenant une pluralité de groupes réactifs avec les isocyanates, comprenant un polyester-polyol ayant un indice d'hydroxyle moyen de 100 à 1000 mg de KOH/g et une fonctionnalité hydroxyle de 2 à 8 ; et (3) un agent porogène comprenant de l'isopentane et du n-pentane en un rapport compris dans l'intervalle de 99:1 à 90:10 parties en poids.

10. Système réactionnel suivant la revendication 9, dans lequel le polyester-polyol est un polyester-polyol aromatique.

11. Système réactionnel suivant la revendication 9, comprenant en outre une matière engendrant du dioxyde de carbone, choisie dans le groupe consistant en l'eau, des acides monocarboxyliques, des acides polycarboxyliques et des urées cycliques à fonctionnalité hydroxy.

12. Système réactionnel suivant la revendication 11, dans lequel la matière engendrant du dioxyde de carbone est l'eau.

13. Système réactionnel suivant la revendication 9, dans lequel l'agent porogène comprend de l'isopentane et du n-pentane en un rapport de l'isopentane au n-pentane compris dans l'intervalle de 98,5:1,5 à 90:10 parties en poids.

14. Système réactionnel suivant la revendication 13, dans lequel l'agent porogène comprend de l'isopentane et du n-pentane en un rapport de l'isopentane au n-pentane compris dans l'intervalle de 97,5:2,5 à 90:10 parties en poids.

15. Système réactionnel suivant la revendication 14, dans lequel l'agent porogène comprend de l'isopentane et du n-pentane en un rapport de l'isopentane au n-pentane compris dans l'intervalle de 97:3 à 90:10 parties en poids.

16. Système réactionnel suivant la revendication 9, dans lequel le polyisocyanate organique est choisi dans le groupe consistant en le 4,4'-diphénylméthane-diisocyanate, le 2,4'-diphénylméthane-diisocyanate, un diphénylméthane-diisocyanate polymère et un diphénylméthane-diisocyanate modifié avec des groupes carbodiimide, des groupes méthane, des groupes allophanate, des groupes isocyanate, des groupes urée, des groupes biuret ou des groupes oxazolidone.

17. Mousse rigide de polyuréthanne produite par le procédé suivant la revendication 1.